# EUROPÄISCHE PATENTSCHRIFT

(11) **EP 3 851 823 B1**
(45) Veröffentlichungstag und Bekanntmachung des Hinweises auf die Patenterteilung: **04.01.2023**
(21) Anmeldenummer: 21151043.3
(22) Anmeldetag: 12.01.2021
(51) Int. Cl.: G01L 19/00

(54) **VORRICHTUNG ZUM ERFASSEN TRIBOLOGISCHER BEANSPRUCHUNG ZUMINDEST EINES BAUTEILS UND VERFAHREN ZUM HERSTELLEN EINER VORRICHTUNG ZUM ERFASSEN TRIBOLOGISCHER BEANSPRUCHUNG ZUMINDEST EINES BAUTEILS**
DEVICE FOR DETECTING TRIBOLOGICAL STRESS OF AT LEAST ONE COMPONENT AND METHOD FOR MANUFACTURING A DEVICE FOR DETECTING TRIBOLOGICAL STRESS OF AT LEAST ONE COMPONENT
DISPOSITIF DE DÉTERMINATION DE LA CONTRAINTE TRIBOLOGIQUE POUR AU MOINS UN COMPOSANT ET PROCÉDÉ DE FABRICATION D'UN DISPOSITIF DE DÉTECTION DE LA CONTRAINTE TRIBOLOGIQUE D'AU MOINS UN COMPOSANT

(30) Priorität: 14.01.2020 DE 102020200352
(43) Veröffentlichungstag der Anmeldung: 21.07.2021
(73) Patentinhaber: Robert Bosch GmbH, 70442 Stuttgart (DE)
(72) Erfinder: Meyer, Klaus, 76887 Bad Bergzabern (DE)

(56) Entgegenhaltungen:
- DE-A1-102016 212 453
- US-A1- 2014 268 607

## Beschreibung

### Stand der Technik

Die Erfindung geht aus von einer Vorrichtung oder einem Verfahren nach Gattung der unabhängigen Ansprüche.

Mittels tribologischer Beanspruchungssensoren können in tribologischen Systemen lokale Beanspruchungsgrößen wie Kontaktdruck und Kontakttemperatur sowie Schmierspaltweite bzw. Filmdicke mittels physikalischer Messtechnik bestimmt werden.

Die DE 10 2016 212 453 A1 offenbart ein Verfahren zum Herstellen einer Vorrichtung zum Erfassen tribologischer Beanspruchung zumindest eines Bauteils, wobei die Vorrichtung einen Korpus und zumindest ein Sensorelement aufweist, wobei der Korpus mit einem Einbettungsabschnitt für das zumindest eine Sensorelement mittels zumindest eines additiven Fertigungsprozesses aus einem keramischen Werkstoff ausgeformt wird. Dabei kann der Korpus mit zumindest einem Kanal zum Führen einer elektrischen Leitung zwischen dem Einbettungsabschnitt und einer von dem Einbettungsabschnitt abgewandten Verbindungsoberfläche des Korpus ausgeformt werden. In der US 2014/268607 A1 sind Verfahren und Systeme zum Einbetten eines Filaments, wie beispielsweise eines Drahtes oder Gitters, in ein thermoplastisches Substrat während der Fertigung einer dreidimensionalen Struktur, einer Strukturkomponente oder einer Struktur mit eingebetteter Elektronik gezeigt, wobei das Filament in mehreren Schichten der thermoplastischen Vorrichtung eingebettet werden kann.

### Offenbarung der Erfindung

Vor diesem Hintergrund werden mit dem hier vorgestellten Ansatz eine Vorrichtung und ein Verfahren gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Eine entsprechende Vorrichtung zum Erfassen tribologischer Beanspruchung zumindest eines Bauteils weist folgende Merkmale auf:
einen Korpus mit einem Einbettungsabschnitt für zumindest ein Sensorelement der Vorrichtung und mit zumindest einem Kanal zum Führen einer elektrischen Leitung zwischen dem Einbettungsabschnitt und einer von dem
Einbettungsabschnitt abgewandten Verbindungsoberfläche des Korpus, wobei der Korpus mittels zumindest eines additiven Fertigungsprozesses oder Urformprozesses aus einem keramischen Werkstoff ausgeformt ist; und
zumindest eine elektrische Leitung zum Kontaktieren des zumindest einen Sensorelements, wobei die zumindest eine elektrische Leitung mittels zumindest eines additiven Fertigungsprozesses aus einem elektrisch leitfähigen Werkstoff in dem zumindest einen Kanal zwischen dem Einbettungsabschnitt und der Verbindungsoberfläche erzeugt ist.

Die Vorrichtung kann auch als tribologischer Beanspruchungssensor, Tribosensor, Sensorvorrichtung oder als eine Erfassungsvorrichtung bezeichnet werden. Die Vorrichtung kann ausgebildet sein, um lokale Beanspruchungsgrößen wie Kontaktdruck, Kontakttemperatur und zusätzlich oder alternativ Schmierspaltweite oder Filmdicke zu erfassen. Die Vorrichtung kann an dem Bauteil oder in dem Bauteil im Bereich einer tribologisch beanspruchten Bauteiloberfläche desselben angeordnet sein. Das Bauteil kann mit einem weiteren Bauteil ein tribologisches System repräsentieren. Das zumindest eine Bauteil kann ein kontaktdynamisch beanspruchter Teil eines Wälzlagers, eines Gleitlagers, einer hydrostatischen und hydrodynamischen Kraft- und Arbeitsmaschine, einer elektrischen Antriebsachse, eines Getriebes, einer Düse, eines Injektors, eines Druckreglers, einer Pumpe, einer hydrostatischen Pumpe, einer hydrodynamischen Pumpe, eines Systems mit zumindest einer Pumpe, zumindest einem Kompressor, zumindest einem Verdichter und zusätzlich oder alternativ zumindest einer Turbomaschine, einer elektrischen Maschine, einer Verpackungsmaschine oder eines Werkzeugs für eine Einzelfertigung oder Serienfertigung von Werkstücken sein. Der Korpus kann beispielsweise quaderförmig, zylindrisch oder zylinderförmig ausgeformt sein. Der keramische Werkstoff kann insbesondere Aluminiumoxid, teilstabilisiertes Zirconiumdioxid, Mischoxidkeramik oder andere keramische Mischungen aufweisen. Der Einbettungsabschnitt kann zumindest eine Mulde aufweisen. Die zumindest eine Mulde kann eine Einbettungstiefe relativ zu einer Kontaktoberfläche des Korpus aufweisen, in welcher der Einbettungsabschnitt ausgeformt bzw. angeordnet ist. Der zumindest eine Kanal kann nahe einer Außenoberfläche des Korpus oder teilweise offen ausgeführt sein.

Gemäß Ausführungsformen kann eine Vorrichtung zum Einsatz tribologischer Beanspruchungssensorik unter Nutzung additiver Fertigungsverfahren bzw. eine hochempfindliche tribologische Beanspruchungssensorik, insbesondere Druckbeanspruchungssensorik mit additiv hergestelltem Vorrichtungskorpus und additiv gefertigten Leiterbahnen bereitgestellt werden. Hierbei kann der Korpus der Sensorvorrichtung aus einem Keramikmaterial additiv hergestellt. Elektrische Leiterbahnen können aus einem elektrisch leitfähigen Werkstoff additiv hergestellt werden. Dabei können die Leiterbahnen in Kanälen angeordnet sein, die in dem Korpus ausgeformt sind. Somit kann anders ausgedrückt ein Kontaktdynamiksensor mit additiv hergestellter Leiterbahn bzw. additiv hergestellten Leiterbahnen bereitgestellt werden.

Vorteilhafterweise kann durch einen geometrischen Aufbau der Vorrichtung, insbesondere des Korpus mit den Kanälen und den Leiterbahnen, eine hohe Signalqualität sowie eine gute örtliche und zeitliche Auflösung von Messsignalen erreicht werden. Somit kann eine hohe Zuverlässigkeit von tribologischen Beanspruchungssensoren, insbesondere Druckbeanspruchungssensoren, erreicht werden, wobei eine physikalische Beeinflussung eines zu untersuchenden und zu bewertenden tribologischen Systems minimiert werden kann. Zumindest kann hierbei eine Art der Beeinflussung bekannt und kann eine Größe der Beeinflussung quantifizierbar sein. Aufgrund einer Ausformung des Korpus aus einem Keramikmaterial kann ein elektrisch nichtleitender bzw. isolierender Korpus erhalten werden, der in einer durch Reibung beanspruchten Oberfläche von Bauteilen oder Maschinenelementen exakt positionierbar, mechanisch steif und minimal thermisch leitfähig ist. Auch kann der Vorteil erzielt werden, dass ein elektrischer Anschluss des zumindest einen Sensorelements zuverlässig, sicher und geschützt sowie platzsparend realisiert werden kann.

Gemäß einer Ausführungsform kann der zumindest eine Kanal ein V-förmiges Querschnittsprofil, insbesondere mit einem Öffnungswinkel zwischen 30 Grad und 150 Grad, oder ein bogenförmiges Querschnittsprofil, insbesondere mit einem geometrisch unbestimmten Radius, aufweisen. Eine solche Ausführungsform bietet den Vorteil, dass eine geometrische Form und damit elektrische Eigenschaften der in dem Kanal erzeugten elektrischen Leitung mit gezielt auslegbar und herstellbar sind.

Auch kann der Einbettungsabschnitt oder eine Kontaktoberfläche des Korpus, in welcher der Einbettungsabschnitt angeordnet ist, plan oder zumindest in einem Teilabschnitt gekrümmt ausgeformt sein. Insbesondere kann eine Oberflächenkontur des Einbettungsabschnitts oder der Kontaktoberfläche auf eine Oberflächenkontur des zumindest einen Bauteils abgestimmt sein. Zusätzlich oder alternativ kann der Einbettungsabschnitt als eine Nut ausgeformt sein, die ein V-förmiges Querschnittsprofil, insbesondere mit einem Öffnungswinkel zwischen 30 Grad und 150 Grad, oder ein bogenförmiges Querschnittsprofil, insbesondere mit einem geometrisch unbestimmten Radius, aufweist. Die Nut kann sich über die gesamte Kontaktoberfläche erstrecken oder anders ausgedrückt die gesamte Kontaktoberfläche durchqueren. Eine solche Ausführungsform bietet den Vorteil, dass durch eine für ein konkretes Bauteil optimierte Ausgestaltung des Korpus in dem Einbettungsabschnitt bzw. der Kontaktoberfläche eine Erfassung von Messwerten noch genauer, robuster und zuverlässiger gemacht werden kann.

Ferner kann der Korpus zwischen dem Einbettungsabschnitt und der Verbindungsoberfläche eine Mantelfläche aufweisen. Hierbei kann der Korpus zwischen dem Einbettungsabschnitt und der Mantelfläche und zusätzlich oder alternativ zwischen der Verbindungsoberfläche und der Mantelfläche mit einem Übergangsabschnitt in Gestalt einer Fase oder einer Rundung ausgeformt sein. Anders ausgedrückt kann ein als Fase oder Rundung ausgeformter Übergangsabschnitt des Korpus zwischen der Mantelfläche und dem Einbettungsabschnitt und zusätzlich oder alternativ zwischen der Mantelfläche und der Verbindungsoberfläche ausgeformt sein. Eine solche Ausführungsform bietet den Vorteil, dass eine geometrische Form und damit elektrische Eigenschaften der elektrischen Leitungen somit gezielt ausgelegt und hergestellt werden können, wobei insbesondere ein scharfer Knick der Leitungen dank des zumindest einen Übergangsabschnitts vermieden werden kann. Auch kann damit ein tribologischer Kontakt zwischen der Vorrichtung und einem Bauteil verbessert werden.

Zudem kann der Einbettungsabschnitt mit einer Oberflächenrauheit mit einem vordefinierten Rauheitskennwert ausgeformt sein oder auf eine Oberflächenrauheit mit einem vordefinierten Rauheitskennwert bearbeitet sein. Insbesondere kann hierbei die Oberflächenrauheit auf eine Oberflächenrauheit des zumindest einen Bauteils abgestimmt sein. Eine solche Ausführungsform bietet den Vorteil, dass eine exakte Anpassung an eine im tribologischen Kontakt vorhandene makroskopische bzw. mikroskopische Geometrie erreicht werden kann und eine Rückwirkung durch das zumindest eine Sensorelement reduziert werden kann.

Des Weiteren kann der Korpus auf Seiten der Verbindungsoberfläche einen Verbindungsabschnitt zum mechanischen Verbinden der Vorrichtung mit einer Trägereinheit und zum axialen Positionieren der Vorrichtung relativ zu der Trägereinheit aufweisen. Hierbei kann die Verbindungsoberfläche beispielsweise eine plane Auflagefläche oder Stirnfläche insbesondere mit undefinierter und unbearbeiteter Oberflächenrauheit aufweisen. Eine mechanische Verbindung der Vorrichtung mit der Trägereinheit kann insbesondere durch Formschluss realisiert werden. Eine solche Ausführungsform bietet den Vorteil, dass eine präzise und zuverlässige Ausrichtung der Vorrichtung ermöglicht wird.

Auch kann die Vorrichtung zumindest ein Sensorelement aufweisen, das in dem Einbettungsabschnitt des Korpus mittels zumindest eines Dünnschichtprozesses aufgebracht ist. Das zumindest eine Sensorelement kann einen physikalischen Sensorwerkstoff, insbesondere ein Metallmaterial aufweisen. An das zumindest eine Sensorelement kann die zumindest eine elektrische Leitung direkt anschließbar sein. Eine solche Ausführungsform bietet den Vorteil, dass keramische Vorrichtungswerkstoffe und physikalische Sensorwerkstoffe eine stabile und zuverlässige Verbindung und Haftfestigkeit ermöglichen. Auch kann auf eine elektrische Isolationsschicht verzichtet werden. Eine Herstellung von einer oder mehreren Sensoreinrichtungen auch als Sensorfeld oder Sensormatrix mit geometrisch beliebiger Ausrichtung im tribologischen Kontaktbereich ermöglicht eine Erhöhung einer Signalauflösung. Zur Vermeidung einer direkten Verschleißbeanspruchung bzw. Erhöhung einer Verschleißbeständigkeit des zumindest einen Sensorelements kann das zumindest eine Sensorelement gegenüber der tribologisch beanspruchten Kontaktoberfläche in dem Einbettungsabschnitt geometrisch zurückgesetzt sein.

Insbesondere kann das zumindest eine Sensorelement mittels zumindest eines additiven Fertigungsprozesses, insbesondere physikalischer Gasphasenabscheidung, chemischer Gasphasenabscheidung, plasmaunterstützter chemischer Gasphasenabscheidung oder eines ähnlichen Vakuumbeschichtungsprozesses bzw. mittels Vakuumbedampfung insbesondere im PVD-Verfahren (Physical Vapour Deposition) aufgebracht sein. Zusätzlich oder alternativ kann im Schritt des Aufbringens das zumindest eine Sensorelement mittels zumindest eines geometrischen Mikrostrukturierungsprozesses aufgebracht sein. Hierbei kann ein direktes Aufdampfen von physikalischen Sensorwerkstoffen in dem Einbettungsabschnitt bzw. einer geometrischen Struktur mit Abmessungen beispielsweise im Nanometerbereich oder Mikrometerbereich erfolgen.

Beispielsweise kann die Vorrichtung eine Mehrzahl von Sensorelementen und eine Mehrzahl von Kanälen und elektrischen Leitungen aufweisen. Hierbei kann eine elektrische Masseleitung in einem Massekanal elektrisch mit allen Sensorelementen verbunden sein. Ferner kann jedes der Sensorelemente zusätzlich mit einer eigenen weiteren elektrischen Leitung in einem eigenen weiteren Kanal elektrisch verbunden sein. Zusätzlich oder alternativ können die weiteren Kanäle mit einem vordefinierten lateralen Abstand zueinander ausgeformt sein. Eine solche Ausführungsform bietet den Vorteil, dass auch bei einer Mehrzahl von Sensorelementen eine Anzahl von Kanälen und elektrischen Leitungen gering gehalten werden kann.

Insbesondere kann dabei das zumindest eine Sensorelement linienförmig, gerade, gleichmäßig gekrümmt, ungleichmäßig gekrümmt, bogenförmig, bogenabschnittförmig und zusätzlich oder alternativ mäanderförmig aufgebracht sein. Eine solche Ausführungsform bietet den Vorteil, dass eine Abstimmung auf eine Art der tribologischen Beanspruchung anwendungsgerecht erfolgen kann, wobei eine Güte eines Sensorsignals verbessert werden kann.

Ferner kann dabei das zumindest eine Sensorelement mit zumindest einer konstanten Abmessung oder mit zumindest einer variablen Abmessung mit einem stetigen oder unstetigen Verlauf aufgebracht sein. Hierbei kann die zumindest eine Abmessung eine Breite und zusätzlich oder alternativ eine Schichtdicke des zumindest einen Sensorelements repräsentieren. Insbesondere kann ein mäanderförmiges Sensorelement mit einer konstanten oder variablen Abmessung aufgebracht sein. Eine solche Ausführungsform bietet den Vorteil, dass eine genaue Anpassung an Anwendungserfordernisse ermöglicht wird und eine Güte eines Messsignals erhöht und werden kann.

Es wird auch ein Verfahren zum Herstellen einer Vorrichtung zum Erfassen tribologischer Beanspruchung zumindest eines Bauteils vorgestellt, wobei das Verfahren folgende Schritte aufweist:
Ausformen eines Korpus mit einem Einbettungsabschnitt für zumindest ein Sensorelement und mit zumindest einem Kanal zum Führen einer elektrischen Leitung zwischen dem Einbettungsabschnitt und einer von dem Einbettungsabschnitt abgewandten Verbindungsoberfläche des Korpus mittels zumindest eines additiven Fertigungsprozesses oder Urformprozesses aus einem keramischen Werkstoff; und
Erzeugen zumindest einer elektrischen Leitung zum Kontaktieren des zumindest einen Sensorelements mittels zumindest eines additiven Fertigungsprozesses aus einem elektrisch leitfähigen Werkstoff in dem zumindest einen Kanal zwischen dem Einbettungsabschnitt und der Verbindungsoberfläche.

Dieses Verfahren kann beispielsweise in Software oder Hardware oder in einer Mischform aus Software und Hardware beispielsweise in einem Steuergerät implementiert sein, mittels dessen eine Fertigungseinrichtung ansteuerbar ist. Durch Ausführen des Verfahrens kann eine Ausführungsform der vorstehend genannten Vorrichtung hergestellt werden. Im Schritt des Ausformens kann der Korpus mittels dreidimensionalen Druckens und zusätzlich oder alternativ mittels Keramikspritzgießens des keramischen Werkstoffs ausgeformt werden. Auf der Verbindungsoberfläche kann in geeigneter Weise, beispielsweise in klassischer Aufbau- und Verbindungstechnik, mittels Löten eine Anbindung an aus der Vorrichtung bzw. aus dem Bauteil herausführende Drähte und Leitungen hergestellt werden.

Auch kann das Verfahren einen Schritt des Aufbringens des zumindest einen Sensorelements in dem Einbettungsabschnitt des Korpus mittels zumindest eines Dünnschichtprozesses aufweisen. Der zumindest eine Dünnschichtprozess kann einen additiven Fertigungsprozess, insbesondere physikalische Gasphasenabscheidung, chemische Gasphasenabscheidung, plasmaunterstützte chemische Gasphasenabscheidung oder einen ähnlichen Vakuumbeschichtungsprozess, und zusätzlich oder alternativ zumindest einen geometrischen Mikrostrukturierungsprozess und zusätzlich oder alternativ einen fotolithografischen Prozess aufweisen. Somit kann zumindest ein Sensorelement zum Erfassen von Kontaktdruck, Kontakttemperatur und zusätzlich oder alternativ Spaltweite sowie gegebenenfalls für hydraulischen Druck in einer einzigen Vorrichtung integriert werden.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung einer Vorrichtung gemäß einem Ausführungsbeispiel in einem Bauteil;
Fig. 2 eine schematische Darstellung einer Vorrichtung gemäß einem Ausführungsbeispiel;
Fig. 3 eine schematische Darstellung einer Vorrichtung gemäß einem Ausführungsbeispiel;
Fig. 4 eine schematische Darstellung eines Sensorelements gemäß einem Ausführungsbeispiel;
Fig. 5 eine schematische Darstellung eines Sensorelements gemäß einem Ausführungsbeispiel;
Fig. 6 eine schematische Darstellung einer Vorrichtung gemäß einem Ausführungsbeispiel; und
Fig. 7 ein Ablaufdiagramm eines Verfahrens zum Herstellen gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

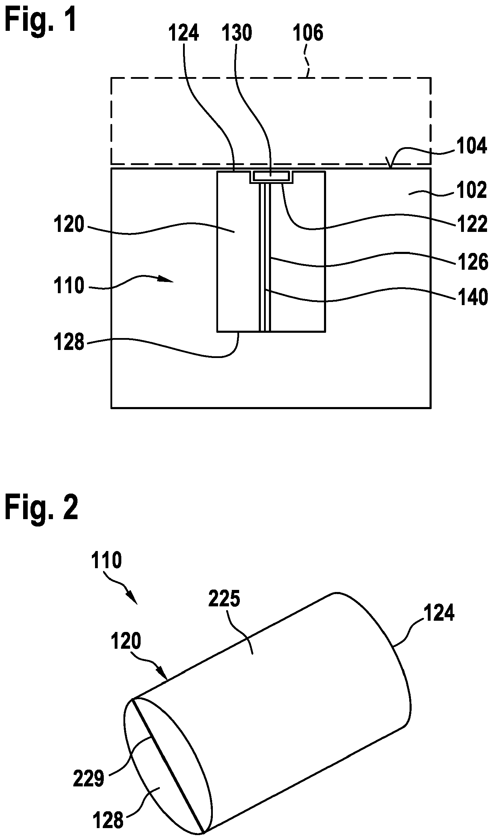

Fig. 1 zeigt eine schematische Darstellung einer Vorrichtung 110 gemäß einem Ausführungsbeispiel in einem tribologisch beanspruchten Bauteil 102. Das tribologisch beanspruchte Bauteil 102 weist eine Bauteiloberfläche 104 auf, die einem weiteren Bauteil 106 zugewandt ist. Die Bauteiloberfläche 104 ist tribologisch beansprucht. Das Bauteil 102 und das weitere Bauteil 106 repräsentieren ein tribologisches System. Beispiele für das Bauteil 102 und/oder das weitere Bauteil 106 bzw. das tribologische System sind weiter unten aufgeführt.

Die Vorrichtung 110 ist in dem Bauteil 102 angeordnet. Genauer gesagt ist die Vorrichtung 110 in dem Bauteil 102 benachbart zu der Bauteiloberfläche 104 angeordnet. Die Vorrichtung 110 ist ausgebildet, um eine tribologische Beanspruchung zumindest des Bauteils 102 zu erfassen. Somit ist die Vorrichtung 110 als eine Sensorvorrichtung 110 bzw. als ein Tribosensor 110, insbesondere als ein Dünnschicht-Tribosensor ausgeführt.

Die Vorrichtung 110 weist einen Korpus 120 auf. Der Korpus 120 ist aus einem keramischen Werkstoff ausgeformt. Dabei ist der Korpus 120 mittels zumindest eines additiven Fertigungsprozesses oder Urformprozesses ausgeformt. Der Korpus 120 weist einen Einbettungsabschnitt 122 für zumindest ein Sensorelement 130 der Vorrichtung 110 bzw. zur Aufnahme zumindest eines Sensorelements 130 der Vorrichtung 110 auf. Der Einbettungsabschnitt 122 ist in bzw. an bzw. auf Seiten einer Kontaktoberfläche 124 des Korpus 120 angeordnet. Der Korpus 120 weist auch zumindest einen Kanal 126 zum Führen einer elektrischen Leitung 140 zwischen dem Einbettungsabschnitt 122 und einer von dem Einbettungsabschnitt 122 abgewandten Verbindungsoberfläche 128 des Korpus 120 auf. Anders ausgedrückt ist der zumindest eine Kanal 126 von dem Einbettungsabschnitt 122, und somit auch von der Kontaktoberfläche 124, zu der Verbindungsoberfläche 128 ausgeformt. In der Darstellung von Fig. 1 ist beispielhaft lediglich ein Kanal 126 gezeigt.

Auch weist die Vorrichtung 110 zumindest eine elektrische Leitung 140 zum Kontaktieren des zumindest einen Sensorelements 130 auf. Die zumindest eine elektrische Leitung 140 ist mittels zumindest eines additiven Fertigungsprozesses aus einem elektrisch leitfähigen Werkstoff in dem zumindest einen Kanal 126 zwischen dem Einbettungsabschnitt 122 und der Verbindungsoberfläche 128 erzeugt. Die zumindest eine elektrische Leitung 140 ist insbesondere als eine elektrische Leiterbahn ausgeführt.

Gemäß dem in Fig. 1 dargestellten Ausführungsbeispiel weist die Vorrichtung 110 beispielhaft lediglich ein Sensorelement 130 auf. Das Sensorelement 130 ist in dem Einbettungsabschnitt 122 des Korpus angeordnet. Hierbei ist das Sensorelement 130 mittels zumindest eines Dünnschichtprozesses in dem Einbettungsabschnitt 122 aufgebracht. Das Sensorelement 130 ist ausgebildet, um einen Kontaktdruck, eine Kontakttemperatur oder eine Spaltweite sowie gegebenenfalls einen hydraulischen Druck als Messgröße hinsichtlich der tribologischen Beanspruchung zu erfassen. Das Sensorelement 130 ist beispielsweise als ein Sensorfaden ausgeführt.

Gemäß einem Ausführungsbeispiel kann der Einbettungsabschnitt 122 und/oder die Kontaktoberfläche 124 plan oder zumindest in einem Teilabschnitt gekrümmt ausgeformt sein. Insbesondere kann dabei eine Oberflächenkontur des Einbettungsabschnitts 122/oder der Kontaktoberfläche 124 auf eine Oberflächenkontur des tribologisch beanspruchten Bauteils 102 und/oder des weiteren Bauteils 106 abgestimmt sein. Auch kann gemäß einem Ausführungsbeispiel der Einbettungsabschnitt 122 und/oder die Kontaktoberfläche 124 mit einer Oberflächenrauheit mit einem vordefinierten Rauheitskennwert ausgeformt sein oder auf eine Oberflächenrauheit mit einem vordefinierten Rauheitskennwert bearbeitet sein. Insbesondere kann dabei die Oberflächenrauheit auf eine Oberflächenrauheit des tribologisch beanspruchten Bauteils 102 und/oder des weiteren Bauteils 106 abgestimmt sein.

Das tribologische System bzw. das Bauteil 102 und/oder das weitere Bauteil 106 betrifft insbesondere Verdrängerpumpen, Strömungspumpen, Innenzahnradpumpen, Hochdruckpumpen, Kraftstoff-Förderpumpen, Ölpumpen, Getriebepumpen, Getriebe-Boosterpumpen, Lenkhilfepumpen, Kühlwasserpumpen auch für hybride Antriebsstränge, Medizinpumpen für MCS ("mechanical circulatory support devices"; mechanische Kreislaufunterstützungsvorrichtungen), auch als VAD-Pumpen (VAD = Ventricle Assist Device; Ventrikelunterstützungsvorrichtung) bezeichnet, Pumpen für Kaffeemaschinen bzw. Kaffeeautomaten, Pumpen für Waschmaschinen, Pumpen für Geschirrspülmaschinen, Pumpen für Hochdruckreiniger, Pumpen für Mobilhydraulik und Arbeitshydraulik, Pumpen für Heizungssystem, Pumpen für onshore-Öl- und -Gas-Produktion, Pumpen für offshore-ÖI- und -Gas Produktion, eBike-Getriebe, Einrichtungen zur Werkzeugverschleißmessung oder dergleichen.

Fig. 2 zeigt eine schematische Darstellung einer Vorrichtung 110 gemäß einem Ausführungsbeispiel. Die Vorrichtung 110 entspricht oder ähnelt hierbei der Vorrichtung aus Fig. 1. Somit ist die Vorrichtung 110, auch Sensorvorrichtung 110 bzw. Tribosensor 110 genannt, ausgebildet, um eine tribologische Beanspruchung zumindest eines Bauteils zu erfassen. Gemäß dem in Fig. 2 dargestellten Ausführungsbeispiel ist die Vorrichtung 110, genauer gesagt deren Korpus, zylindrisch ausgeformt. Von der Vorrichtung 110 sind in der Darstellung von Fig. 2 der Korpus 120 mit der Kontaktoberfläche 124, der Verbindungsoberfläche 128, einer Mantelfläche 225 und einem Verbindungsabschnitt 229 gezeigt und explizit bezeichnet.

In der Kontaktoberfläche 124 ist der Einbettungsabschnitt ausgeformt, auch wenn dies in Fig. 2 darstellungsbedingt verdeckt ist. Anders ausgedrückt repräsentiert die Kontaktoberfläche 124 eine dem zwischen Bauteilen auftretenden tribologischen Kontakt zugewandte Stirnfläche des Korpus 120. Zwischen dem Einbettungsabschnitt, und somit der Kontaktoberfläche 124, und der Verbindungsoberfläche 128 weist der Korpus 120 die Mantelfläche 225 auf. Anders ausgedrückt erstreckt sich die Mantelfläche 225 zwischen der Kontaktoberfläche 124 und der Verbindungsoberfläche 128. Auf Seiten der Verbindungsoberfläche 128 weist der Korpus 120 den Verbindungsabschnitt 229 auf. Der Verbindungsabschnitt 229 dient zum mechanischen Verbinden der Vorrichtung 110 mit einer Trägereinheit und zum axialen Positionieren der Vorrichtung 110 relativ zu der Trägereinheit. Gemäß dem hier dargestellten Ausführungsbeispiel ist der Verbindungsabschnitt 229 als eine Nut ausgeformt, die sich quer über die gesamte Verbindungsoberfläche 128 erstreckt.

Der Korpus 120 ist aus einem keramischen Werkstoff, insbesondere Aluminiumoxid, PSZ (partially stabilized zirconia; ZrO2 teilstabilisiert) und Mischoxidkeramik (Al2O3 + PSZ) oder anderweitigen Mischungen, insbesondere mittels CIM (Ceramic Injection Molding; Keramikspritzguss) oder mittels anderer additiver Fertigungsverfahren hergestellt. Der Korpus 120 weist beispielhaft eine zylindrische Außenkontur oder alternativ quaderförmige Außenkontur auf. Der Korpus 120 wird unter anderem zur Aufnahme von Sensorelementen genutzt.

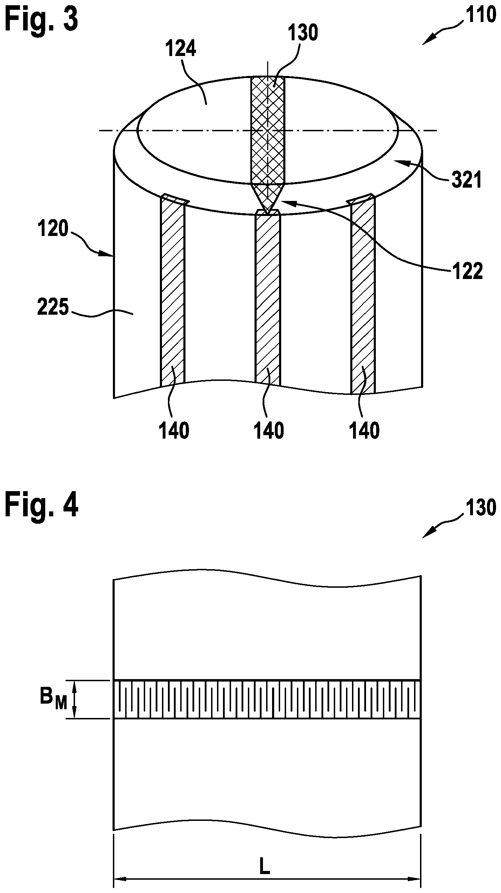

Fig. 3 zeigt eine schematische Darstellung einer Vorrichtung 110 gemäß einem Ausführungsbeispiel. Die Vorrichtung 110 entspricht oder ähnelt hierbei der Vorrichtung aus Fig. 1 bzw. Fig. 2. Somit ist die Vorrichtung 110, ausgebildet, um eine tribologische Beanspruchung zumindest eines Bauteils zu erfassen. In Fig. 3 ist die Vorrichtung 110 in einer schrägen Seitenansicht gezeigt. In der Darstellung von Fig. 3 sind von der Vorrichtung 110 der Korpus 120, ein Sensorelement 130 in Gestalt eines Sensorfadens, der Einbettungsabschnitt 122 in Gestalt einer Nut bzw. nutartigen Vertiefung in der Kontaktoberfläche 124, die Mantelfläche 225, eine Mehrzahl von mit als Leiterbahnen ausgeführten elektrischen Leitungen 140 gefüllten Kanälen und ein Übergangsabschnitt 321 gezeigt.

Gemäß dem in Fig. 3 gezeigten Ausführungsbeispiel ist auf Seiten der Kontaktoberfläche 224 lediglich ein Sensorelement 130 in dem Einbettungsabschnitt 122 des Korpus 120 angeordnet. Der Einbettungsabschnitt 122 ist hierbei als eine Nut ausgeformt. Diese Nut weist ein V-förmiges Querschnittsprofil, insbesondere mit einem Öffnungswinkel zwischen 30 Grad und 150 Grad, oder ein bogenförmiges Querschnittsprofil, insbesondere mit einem geometrisch unbestimmten Radius, auf.

Ferner sind lediglich beispielhaft drei Kanäle in dem Korpus 120 gezeigt, in denen jeweils eine elektrische Leitung 140 in Gestalt einer Leiterbahn erzeugt ist. Jeder der Kanäle ist ausgeformt, um eine elektrische Leitung 140 aufzunehmen. Hierbei ist jeder der Kanäle ausgebildet, um eine zwischen der Kontaktoberfläche 124 bzw. dem Einbettungsabschnitt 122 bzw. dem Sensorelement 130 und der von dem Einbettungsabschnitt 122 bzw. der Kontaktoberfläche 124 abgewandten Verbindungsoberfläche des Korpus 120 erzeugte elektrische Leitung 140 aufzunehmen.

Der Übergangsabschnitt 321 ist zwischen der Kontaktoberfläche 124 und der Mantelfläche 225 des Korpus 120 ausgeformt. Gemäß dem hier dargestellten Ausführungsbeispiel ist der Übergangsabschnitt 321 als eine Fase bzw. Übergangsfase ausgeformt. Der Übergangsabschnitt 321 weist somit ein V-förmiges Querschnittsprofil, insbesondere mit einem Öffnungswinkel zwischen 30 Grad und 150 Grad, auf. Alternativ kann der Übergangsabschnitt 321 als eine Rundung mit einem bogenförmigen Querschnittsprofil, insbesondere mit einem geometrisch unbestimmten Radius, ausgeformt sein. Zusätzlich oder alternativ kann der Korpus 120 zwischen der Verbindungsoberfläche 128 und der Mantelfläche 225 ebenfalls mit einem Übergangsabschnitt 321 ausgeformt sein bzw. einen weiteren Übergangsabschnitte aufweisen.

Fig. 4 zeigt eine schematische Darstellung eines Sensorelements 130 gemäß einem Ausführungsbeispiel. Das Sensorelement 130 entspricht oder ähnelt hierbei dem Sensorelement aus einer der vorstehend beschriebenen Figuren. Gemäß dem in Fig. 4 dargestellten Ausführungsbeispiel ist das Sensorelement 130 mäanderförmig aufgebracht. Anders ausgedrückt ist das Sensorelement 130 als ein mäanderförmiger Sensorfaden aufgebracht. Wiederum anders ausgedrückt weist das Sensorelement 130 eine mäanderförmige Linienform auf. Eine Mäanderbreite B_{M} sowie eine Länge L bzw. Sensorlänge bzw. hier Mäanderlänge sind ebenfalls in Fig. 4 eingezeichnet. Gemäß einem anderen Ausführungsbeispiel kann das Sensorelement 130 auch linienförmig, gerade, gleichmäßig gekrümmt, ungleichmäßig gekrümmt, bogenförmig und/oder bogenabschnittförmig aufgebracht sein.

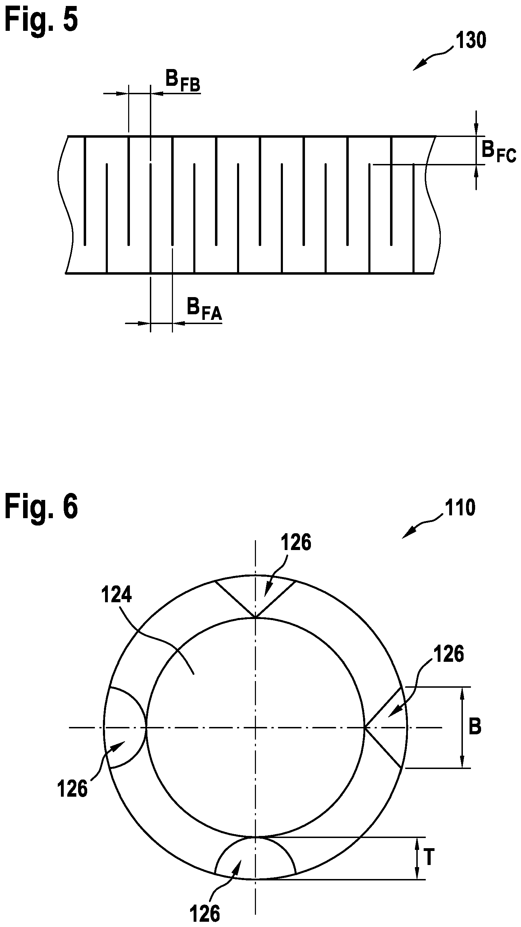

Fig. 5 zeigt eine schematische Darstellung eines Sensorelements 130 gemäß einem Ausführungsbeispiel. Das Sensorelement 130 entspricht hierbei dem Sensorelement aus Fig. 4 und ist in der Darstellung von Fig. 5 vergrößert gezeigt. Das Sensorelement 130 ist gemäß einem Ausführungsbeispiel mit zumindest einer konstanten Abmessung aufgebracht. Alternativ ist das Sensorelement 130 gemäß einem Ausführungsbeispiel mit zumindest einer variablen Abmessung mit einem stetigen oder unstetigen Verlauf aufgebracht. Bei der zumindest einen Abmessung des Sensorelements 130 handelt es sich um eine Breite B_{FA}, B_{FB}, B_{FC} und/oder eine Schichtdicke des Sensorelements 130. Gemäß dem in Fig. 5 dargestellten Ausführungsbeispiel ist das Sensorelement 130 mit einer variablen Abmessung, genauer gesagt mit einer variablen Breite B_{FA}, B_{FB}, B_{FC} des Sensorfadens in dem Mäander aufgebracht. So kann das Sensorelement 130 in einem ersten Bereich des Mäanders eine erste Breite B_{FA} aufweisen, in einem zweiten Bereich des Mäanders eine zweite Breite B_{FB} aufweisen und in einem dritten Bereich des Mäanders eine dritte Breite B_{FC} aufweisen.

Fig. 6 zeigt eine schematische Darstellung einer Vorrichtung 110 gemäß einem Ausführungsbeispiel. Die Vorrichtung 110 entspricht oder ähnelt hierbei der Vorrichtung aus Fig. 1 bzw. Fig. 2. In der Darstellung von Fig. 6 ist die Vorrichtung 110 in einer Draufsicht auf die Kontaktoberfläche 124 gezeigt. Dabei sind von der Vorrichtung 110 die Kontaktoberfläche 124, lediglich beispielhaft vier Kanäle 126, eine Breite B jedes Kanals 126 und eine Tiefe T jedes Kanals 126 gezeigt. Die Kanäle 126 sind gemäß dem in Fig. 6 dargestellten Ausführungsbeispiel gleichmäßig entlang einem Umfang der Mantelfläche des Korpus der Vorrichtung 110 verteilt ausgeformt. Hierbei sind zu Darstellungszwecken zwei der Kanäle 126 mit einem V-förmigen Querschnittsprofil gezeigt und sind zwei weitere Kanäle 126 mit einem bogenförmigen Querschnittsprofil gezeigt. Das V-förmige Querschnittsprofil weist insbesondere einen Öffnungswinkel zwischen 30 Grad und 150 Grad auf. Das bogenförmige Querschnittsprofil weist insbesondere einen geometrisch unbestimmten Radius auf. Die Tiefe T liegt insbesondere zwischen 600 Nanometer und 5 Mikrometer.

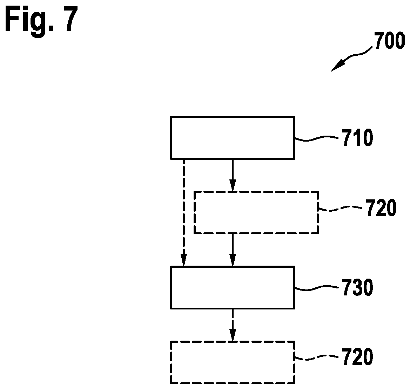

Fig. 7 zeigt ein Ablaufdiagramm eines Verfahrens 700 zum Herstellen gemäß einem Ausführungsbeispiel. Das Verfahren 700 zum Herstellen ist ausführbar, um eine Vorrichtung zum Erfassen tribologischer Beanspruchung zumindest eines Bauteils herzustellen. Dabei ist das Verfahren 700 zum Herstellen ausführbar, um die Vorrichtung aus einer der vorhergehenden Figuren oder eine ähnliche Vorrichtung herzustellen. Somit ist die Vorrichtung aus einer der vorhergehenden Figuren oder eine ähnliche Vorrichtung durch Ausführen des Verfahrens 700 herstellbar. Das Verfahren 700 zum Herstellen umfasst einen Schritt 710 des Ausformens und einen Schritt 730 des Erzeugens.

Im Schritt 710 des Ausformens wird ein Korpus mit einem Einbettungsabschnitt für zumindest ein Sensorelement und mit zumindest einem Kanal zum Führen einer elektrischen Leitung zwischen dem Einbettungsabschnitt und einer von dem Einbettungsabschnitt abgewandten Verbindungsoberfläche des Korpus mittels zumindest eines additiven Fertigungsprozesses oder Urformprozesses aus einem keramischen Werkstoff ausgeformt. Im Schritt 710 des Ausformens wird der Korpus beispielsweise mittels dreidimensionalen Druckens und/oder mittels Keramikspritzgießens des keramischen Werkstoffs ausgeformt. Nachfolgend wird im Schritt 730 des Erzeugens zumindest eine elektrische Leitung zum Kontaktieren des zumindest einen Sensorelements mittels zumindest eines additiven Fertigungsprozesses aus einem elektrisch leitfähigen Werkstoff in dem zumindest einen Kanal zwischen dem Einbettungsabschnitt und der Verbindungsoberfläche erzeugt.

Auch weist das Verfahren 700 zum Herstellen gemäß einem Ausführungsbeispiel einen Schritt 720 des Aufbringens auf. Im Schritt 720 des Aufbringens wird das zumindest eine Sensorelement mittels zumindest eines Dünnschichtprozesses in dem Einbettungsabschnitt des Korpus aufgebracht. Der zumindest eine Dünnschichtprozess kann einen additiven Fertigungsprozess, insbesondere physikalische Gasphasenabscheidung, chemische Gasphasenabscheidung, plasmaunterstützte chemische Gasphasenabscheidung oder einen ähnlichen Vakuumbeschichtungsprozess, und/oder zumindest einen geometrischen Mikrostrukturierungsprozess und/oder einen fotolithografischen Prozess aufweisen. Der Schritt 720 des Aufbringens ist vor oder nach dem Schritt 730 des Erzeugens ausführbar.

Unter Bezugnahme auf die vorstehend beschriebenen Figuren werden nachfolgend Hintergründe und ergänzende Merkmale von Ausführungsbeispielen zusammenfassend und/oder mit anderen Worten kurz dargestellt.

Kontaktdynamiksensoren, auch tribologische Beanspruchungssensoren genannt, sogenannte "Tribosensoren", dienen zur Messung lokaler Beanspruchungsgrößen wie Kontaktdruck und Kontakttemperatur sowie Schmierspaltweite bzw. Filmdicke mittels physikalischer Messtechnik in einem tribologischen System. Ein geometrischer Aufbau solcher Sensoren beeinflusst eine Signalqualität sowie eine örtliche und zeitliche Auflösung von Messsignalen. Mit Kontaktdrucksensoren, die im Dünnschicht-Verfahren mittels Vakuum und Fotolithografie hergestellt werden, daher auch "Dünnschicht-Tribosensoren" (DST) genannt, lassen sich Sensorstrukturen typischerweise in der Größenordnung von 20 bis 50 Mikrometer realisieren. Dünnschicht-Tribosensoren wie die Vorrichtung 110 ermöglichen durch ihre geringen geometrischen Abmessungen eine sehr große lokale Auflösung des tribologischen Kontaktes. Diese DST nutzen den piezo-elektrischen, piezoresistiven bzw. thermo-resistiven Effekt bestimmter Metalle und Legierungen. Um diesen Effekt nutzen zu können, soll der metallische Sensor bzw. das Sensorelement 130 elektrisch vom Bauteil oder vom Sensorträger isolierend getrennt sein. Eine Spannungsversorgung und Signalübertragung erfolgen mittels elektrisch leitender Leiterbahnen bzw. Leitungen 140 vom Sensorelement 130 zu einer Schnittstelle mit einer außerhalb des tribologischen Kontaktes aufgebauten Messkette. Eine geometrische Form der Leiterbahn bzw. Leitung 140 und die Verbindung von Sensor bzw. Sensorelement 130 zu der Leitung 140 sind für eine Qualität des Kontaktdynamik-Sensors mitentscheidend. Hierzu kann das additive Fertigungsverfahren ausgenutzt werden.

Auf dem im additiven Verfahren, z. B. 3D-Druck, bzw. Spritzguss hergestellten keramischen Sensorträger bzw. Korpus 120 werden mittels Vakuumbedampfung insbesondere im PVD-Verfahren (Physical Vapour Deposition) eine oder nacheinander mehrere metallische Sensorstrukturen bzw. Sensorelemente 130 als geometrischer Faden hergestellt, optional mit anschließendem fotolithografischen Prozess zur geometrischen Feinstrukturierung als Mäander oder dergleichen. Metallrückstände auf der Stirnfläche bzw. Kontaktoberfläche 124 außerhalb des Sensorfadens werden beispielsweise mittels Abwischen mit chemischen Lösungsmitteln entfernt. Der keramische Träger bzw. Korpus 120 besitzt am Rande der kontaktdynamischen Zone eine Fase bzw. einen Radius als Übergangsabschnitt 321 zur beispielsweise zylindrischen Mantelfläche 225. Die Kontaktoberfläche 124 mit einem bzw. mehreren metallischen Sensorfaden bzw. -fäden kann eben oder gekrümmt sein und optional eine nutartige Vertiefung als Einbettungsabschnitt 122 aufweisen.

In einem weiteren additiven Fertigungsverfahren, wie es z. B. Tintenstrahldrucker ermöglichen, werden auf der Kontaktoberfläche 124 und einer Übergangsfläche des metallischen Sensorfadens bzw. Sensorelements 130 eine oder mehrere elektrische Leiterbahn(en) bzw. Leitung(en) 140 beispielsweise aus Silber hergestellt. Damit ist das zumindest eine Sensorelement 130 elektrisch an die Leiterbahn(en) bzw. zumindest eine Leitung 140 angebunden. Bei mehreren Leitungen 140 sind diese geometrisch versetzt zueinander angeordnet. Auf der Mantelfläche 225 ist zumindest ein Kanal 126 zur Aufnahme der Leiterbahn(en) bzw. zumindest einen Leitung 140 angeordnet. Dessen Geometrie ist beispielsweise ähnlich wie jene des Einbettungsabschnitts 122 auf der Kontaktoberfläche 124 ausgeführt. Eine geometrische Form und damit elektrische Eigenschaften der Leitung 140 lassen sich somit gezielt auslegen und herstellen. Auf der der kontaktdynamischen Beanspruchung gegenüberliegenden Verbindungsoberfläche 128 ist bzw. wird in den geeigneter Weise, beispielsweise in klassischer Aufbau- und Verbindungstechnik mittels Löten, eine Anbindung an die aus dem Bauteil 102 herausführenden Drähte und Leitungen hergestellt.

Der aus einem keramischen Werkstoff, insbesondere mit CIM (Ceramic Injection Molding; Keramikspritzguss) oder mit additiven Fertigungsverfahren, hergestellte Korpus 120, der bevorzugt eine zylindrische oder quaderförmige Außenkontur besitzt, beispielsweise mit einem Außendurchmesser DA ≥ 1 Millimeter oder eine Kantenlänge KL ≥ 1 Millimeter, einer Länge der Vorrichtung L ≥ 1 Millimeter und bei zylindrischer Ausführung einer Wanddicke WDZ ≥ 200 Mikrometer und bei quaderförmiger Ausführung einer Wanddicke WDQ ≥ 200 Mikrometer, wird zur Aufnahme von Tribosensoren bzw. Sensorelementen 130 genutzt.

Auf der dem tribologischen Kontakt zugewandten Kontaktoberfläche 124 kann die Fläche eben bzw. mit einer beliebig gestalteten Kontur versehen sein und eine bestimmte Oberflächenrauheit aufweisen. Eine solche Konturierung ermöglicht eine exakte Anpassung an eine im tribologischen Kontakt vorhandene makroskopische bzw. mikroskopische Geometrie, um damit eine Minimierung einer Rückwirkung durch eine oder mehrere eingesetzte keramische Vorrichtungen 110. Eine Anpassung an eine Oberflächenrauheit des umgebenden Originalbauteils reduziert die Rückwirkung durch den Sensor. Die Kontaktoberfläche 124 weist gemäß einem Ausführungsbeispiel eine nutartige bevorzugt keilförmige bzw. halbkreisförmige Vertiefung über den gesamten Durchmesser als Einbettungsabschnitt 122 auf. Deren Tiefe liegt insbesondere zwischen 250 Nanometer und 5 Mikrometer. Ein Öffnungswinkel der Keilform liegt insbesondere zwischen 30 und 150 Grad. Bei einer halbkreisförmigen Vertiefung kann der Radius bevorzugt geometrisch unbestimmt gelassen werden.

Eine Breite des Sensorfadens des Sensorelements 130 ist jeweils für die zu erwartende Kontaktbeanspruchung auszulegen und kann insbesondere zwischen 10 Mikrometer und 50 Mikrometer liegen. Die mäanderförmige Substruktur ermöglicht es, eine effektive Länge des elektrischen Widerstands insbesondere um den Faktor 10 bis 100 zu vergrößern. Damit lässt sich eine elektrische Signalauflösung verbessern. Bei der mäanderförmigen Substruktur kann die jeweilige Linienbreite zwischen 25 Nanometer und 10 Mikrometer liegen. Die Mäanderstruktur kann geometrisch mit jeweils einer konstanten Fadenbreite B_{FA} oder verschiedenen Breiten B_{FB} und B_{FC} beliebig gestaltet sein.

Der sich an die Kontaktoberfläche 124 des Korpus 120 anschließende geometrische Übergang bzw. Übergangsabschnitt 321 kann insbesondere als Fase mit einem Winkel von 10 bis 80 Grad und einer Länge von 500 Nanometer bis 10 Mikrometer ausgeführt sein. Im Falle eines bogenförmigen Übergangsabschnitts 321 kann der Krümmungsradius unbestimmt bleiben.

Die zumindest eine Leitung 140 weist in Abhängigkeit von einer Größe des keramischen Korpus 120 eine Breite insbesondere von 250 Mikrometer bis 1,5 Millimeter auf. Eine Höhe bzw. Schichtdicke der Leiterbahn bzw. Leitung 140 beträgt insbesondere 500 Nanometer bis 4,5 Mikrometer.

Auf der zylindrischen Mantelfläche 225 ist bzw. wird zumindest eine nutartige, beispielsweise keilförmige bzw. halbkreisförmige, Vertiefung als Kanal 126 über die gesamte Länge von der Kontaktoberfläche 124 zu der Verbindungsoberfläche 128 ausgeführt. Die Tiefe T liegt insbesondere zwischen 600 Nanometer und 5 Mikrometer. Der Öffnungswinkel der Keilform liegt insbesondere zwischen 30 und 150 Grad. Bei einer halbkreisförmigen Vertiefung kann der Radius geometrisch unbestimmt gelassen werden. Diese Kanäle 126 sind gemäß einem Ausführungsbeispiel so gestaltet, dass bei mehreren Sensorelementen 130 alle Sensorfäden eine Leitung 140 als Masseanschluss nutzen können und zusätzlich mit jeweils einer eigenen Leitung 140 verbunden sind. Die Kanäle 126 und somit die Leitungen 140 sind geometrisch zueinander versetzt bzw. mit einem vordefinierten lateralen Abstand über die zylindrische Mantelfläche 225 angeordnet.

Die Vorrichtung 110, genauer gesagt der Korpus 120, weist auf der Verbindungsoberfläche 128 insbesondere eine plane Auflagefläche, insbesondere ohne definierte und bearbeitete Oberflächenrauheit auf. Ein Übergang von der Mantelfläche 225 zu der Verbindungsoberfläche 128 kann ebenfalls einen als Fase oder als bogenförmige Rundung ausgeführten Übergangsabschnitt 321 aufweisen. Zusätzlich weist die Verbindungsoberfläche 128 gemäß einem Ausführungsbeispiel eine insbesondere geometrische Vorrichtung zum axialen Positionieren auf, den Verbindungsabschnitt 229.

Somit werden insbesondere mittels Tintenstahldruck bzw. "Aerosol Jet Printing" hoch selektiv und präzise die Leitungen 140 auf dem keramischen Korpus 120 aufgetragen. Damit wird dafür gesorgt, dass es zu keinem kurzschlussbildenden Auftrag durch zu großen Leiterbahnauftrag kommt. Die vorher in dem keramischen Korpus 120 hergestellten Vertiefungen bzw. Kanäle 126 unterstützen die Sicherheit vor einem elektrischen Kurzschluss. Überstehende Leiterbahnteile können gegebenenfalls mit einem nachträglichen Reinigungsschritt chemisch oder mechanisch entfernt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Vorrichtung (110) zum Erfassen tribologischer Beanspruchung zumindest eines Bauteils (102, 106), wobei die Vorrichtung (110) zumindest folgende Merkmale aufweist:
einen Korpus (120) mit einem Einbettungsabschnitt (122) für zumindest ein Sensorelement (130) der Vorrichtung (110) und mit zumindest einem Kanal (126) zum Führen einer elektrischen Leitung (140) zwischen dem Einbettungsabschnitt (122) und einer von dem Einbettungsabschnitt (122) abgewandten Verbindungsoberfläche (128) des Korpus (120), wobei der Korpus (120) mittels zumindest eines additiven Fertigungsprozesses oder Urformprozesses aus einem keramischen Werkstoff ausgeformt ist; und
zumindest eine elektrische Leitung (140) zum Kontaktieren des zumindest einen Sensorelements (130), wobei die zumindest eine elektrische Leitung (140) mittels zumindest eines additiven Fertigungsprozesses aus einem elektrisch leitfähigen Werkstoff in dem zumindest einen Kanal (126) zwischen dem Einbettungsabschnitt (122) und der Verbindungsoberfläche (128) erzeugt ist.

2. Vorrichtung (110) gemäß Anspruch 1, bei der der zumindest eine Kanal (126) ein V-förmiges Querschnittsprofil, insbesondere mit einem Öffnungswinkel zwischen 30 Grad und 150 Grad, oder ein bogenförmiges Querschnittsprofil, insbesondere mit einem geometrisch unbestimmten Radius, aufweist.

3. Vorrichtung (110) gemäß einem der vorangegangenen Ansprüche, bei der der Einbettungsabschnitt (122) plan oder zumindest in einem Teilabschnitt gekrümmt ausgeformt ist, insbesondere wobei eine Oberflächenkontur des Einbettungsabschnitts (122) auf eine Oberflächenkontur des zumindest einen Bauteils (102, 106) abgestimmt ist, und/oder wobei der Einbettungsabschnitt (122) als eine Nut ausgeformt ist, die ein V-förmiges Querschnittsprofil, insbesondere mit einem Öffnungswinkel zwischen 30 Grad und 150 Grad, oder ein bogenförmiges Querschnittsprofil, insbesondere mit einem geometrisch unbestimmten Radius, aufweist.

4. Vorrichtung (110) gemäß einem der vorangegangenen Ansprüche, bei der der Korpus (120) zwischen dem Einbettungsabschnitt (122) und der Verbindungsoberfläche (128) eine Mantelfläche (225) aufweist, wobei der Korpus (120) zwischen dem Einbettungsabschnitt (122) und der Mantelfläche (225) und/oder zwischen der Verbindungsoberfläche (128) und der Mantelfläche (225) mit einem Übergangsabschnitt (321) in Gestalt einer Fase oder einer Rundung ausgeformt ist.

5. Vorrichtung (110) gemäß einem der vorangegangenen Ansprüche, bei der der Einbettungsabschnitt (122) mit einer Oberflächenrauheit mit einem vordefinierten Rauheitskennwert ausgeformt ist oder auf eine Oberflächenrauheit mit einem vordefinierten Rauheitskennwert bearbeitet ist, insbesondere wobei die Oberflächenrauheit auf eine Oberflächenrauheit des zumindest einen Bauteils (102, 106) abgestimmt ist.

6. Vorrichtung (110) gemäß einem der vorangegangenen Ansprüche, bei der der Korpus (120) auf Seiten der Verbindungsoberfläche (128) einen Verbindungsabschnitt (229) zum mechanischen Verbinden der Vorrichtung (110) mit einer Trägereinheit und zum axialen Positionieren der Vorrichtung (110) relativ zu der Trägereinheit aufweist.

7. Vorrichtung (110) gemäß einem der vorangegangenen Ansprüche, mit zumindest einem Sensorelement (130), das in dem Einbettungsabschnitt (122) des Korpus (120) mittels zumindest eines Dünnschichtprozesses aufgebracht ist.

8. Vorrichtung (110) gemäß Anspruch 7, mit einer Mehrzahl von Sensorelementen (130) und mit einer Mehrzahl von Kanälen (126) und elektrischen Leitungen (140), wobei eine elektrische Masseleitung (140) in einem Massekanal (126) elektrisch mit allen Sensorelementen (130) verbunden ist, wobei jedes der Sensorelemente (130) zusätzlich mit einer eigenen weiteren elektrischen Leitung (140) in einem eigenen weiteren Kanal (126) elektrisch verbunden ist, und/oder wobei die weiteren Kanäle (126) mit einem vordefinierten lateralen Abstand zueinander ausgeformt sind.

9. Vorrichtung (110) gemäß einem der Ansprüche 7 bis 8, bei der das zumindest eine Sensorelement (130) linienförmig, gerade, gleichmäßig gekrümmt, ungleichmäßig gekrümmt, bogenförmig, bogenabschnittförmig und/oder mäanderförmig aufgebracht ist.

10. Vorrichtung (110) gemäß einem der Ansprüche 7 bis 9, bei der das zumindest eine Sensorelement (130) mit zumindest einer konstanten Abmessung oder mit zumindest einer variablen Abmessung mit einem stetigen oder unstetigen Verlauf aufgebracht ist, wobei die zumindest eine Abmessung eine Breite (B_{FA}, B_{FB}, B_{FC}) und/oder eine Schichtdicke des zumindest einen Sensorelements (130) repräsentiert.

11. Verfahren (700) zum Herstellen einer Vorrichtung (110) zum Erfassen tribologischer Beanspruchung zumindest eines Bauteils (102, 106), wobei das Verfahren (700) folgende Schritte aufweist:
Ausformen (710) eines Korpus (120) mit einem Einbettungsabschnitt (122) für zumindest ein Sensorelement (130) und mit zumindest einem Kanal (126) zum Führen einer elektrischen Leitung (140) zwischen dem Einbettungsabschnitt (122) und einer von dem Einbettungsabschnitt (122) abgewandten Verbindungsoberfläche (128) des Korpus (120) mittels zumindest eines additiven Fertigungsprozesses oder Urformprozesses aus einem keramischen Werkstoff; und
Erzeugen (730) zumindest einer elektrischen Leitung (140) zum Kontaktieren des zumindest einen Sensorelements (130) mittels zumindest eines additiven Fertigungsprozesses aus einem elektrisch leitfähigen Werkstoff in dem zumindest einen Kanal (126) zwischen dem Einbettungsabschnitt (122) und der Verbindungsoberfläche (128).

12. Verfahren (700) gemäß Anspruch 11, mit einem Schritt (720) des Aufbringens des zumindest einen Sensorelements (130) in dem Einbettungsabschnitt (122) des Korpus (120) mittels zumindest eines Dünnschichtprozesses.

## Claims

1. Device (110) for detecting tribological stress of at least one component (102, 106), wherein the device (110) has at least the following features:
a body (120) having an embedding section (122) for at least one sensor element (130) of the device (110) and having at least one channel (126) for guiding an electrical conductor (140) between the embedding section (122) and a connecting surface (128) of the body (120) that faces away from the embedding section (122), wherein the body (120) is formed from a ceramic material by means of at least one additive production process or primary forming process; and
at least one electrical conductor (140) for contacting the at least one sensor element (130), wherein the at least one electrical conductor (140) is produced from an electrically conductive material by means of at least one additive production process in the at least one channel (126) between the embedding section (122) and the connecting surface (128).

2. Device (110) according to Claim 1, in which the at least one channel (126) has a V-shaped cross-sectional profile, in particular with an opening angle between 30 degrees and 150 degrees, or an arcuate cross-sectional profile, in particular with a geometrically indeterminate radius.

3. Device (110) according to one of the preceding claims, in which the embedding section (122) is formed so as to be planar or curved, at least in one subsection, in particular wherein a surface contour of the embedding section (122) is matched to a surface contour of the at least one component (102, 106), and/or wherein the embedding section (122) is formed as a groove which has a V-shaped cross-sectional profile, in particular with an opening angle between 30 degrees and 150 degrees, or an arcuate cross-sectional profile, in particular with a geometrically indeterminate radius.

4. Device (110) according to one of the preceding claims, in which the body (120) between the embedding section (122) and the connecting surface (128) has a lateral surface (225), wherein the body (120) between the embedding section (122) and the lateral surface (225) and/or between the connecting surface (128) and the lateral surface (225) is formed with a transition section (321) in the shape of a chamfer or a rounded portion.

5. Device (110) according to one of the preceding claims, in which the embedding section (122) is formed with a surface roughness with a predefined roughness characteristic or is machined to a surface roughness with a predefined roughness characteristic, in particular wherein the surface roughness is matched to a surface roughness of the at least one component (102, 106).

6. Device (110) according to one of the preceding claims, in which, on sides of the connecting surface (128), the body (120) has a connecting section (229) for mechanically connecting the device (110) to a carrier unit and for axially positioning the device (110) relative to the carrier unit.

7. Device (110) according to one of the preceding claims, having at least one sensor element (130), which is applied in the embedding section (122) of the body (120) by means of at least one thin-film process.

8. Device (110) according to Claim 7, having a plurality of sensor elements (130) and having a plurality of channels (126) and electrical conductors (140), wherein an electrical earth line (140) in an earth channel (126) is connected electrically to all sensor elements (130), wherein each of the sensor elements (130) is additionally electrically connected to a dedicated further electrical conductor (140) in a dedicated further channel (126), and/or wherein the further channels (126) are formed with a predefined lateral spacing from one another.

9. Device (110) according to either of Claims 7 and 8, in which the at least one sensor element (130) is applied in the form of a line, a straight line, a uniform curve, a non-uniform curve, in the form of an arc, in the form of a section of an arc and/or in the form of a meander.

10. Device (110) according to one of Claims 7 to 9, in which the at least one sensor element (130) is applied with at least one constant dimension or with at least one variable dimension with a continuous or noncontinuous course, wherein the at least one dimension represents a width (B_{FA}, B_{FB}, B_{FC}) and/or a layer thickness of the at least one sensor element (130).

11. Method (700) for producing a device (110) for detecting tribological stress of at least one component (102, 106), wherein the method (700) has the following steps:
forming (710) a body (120) having an embedding section (122) for at least one sensor element (130) and having at least one channel (126) for guiding an electrical conductor (140) between the embedding section (122) and a connecting surface (128) of the body (120) that faces away from the embedding section (122) from a ceramic material by means of at least one additive production process or primary forming process; and
producing (730) at least one electrical conductor (140) for contacting the at least one sensor element (130) from an electrically conductive material by means of at least one additive production process in the at least one channel (126) between the embedding section (122) and the connecting surface (128).

12. Method (700) according to Claim 11, including a step (720) of applying the at least one sensor element (130) in the embedding section (122) of the body (120) by means of at least one thin-film process.

## Revendications

1. Dispositif (110) pour la détection de la contrainte tribologique d'au moins un composant (102, 106), le dispositif (110) présentant au moins les caractéristiques suivantes :
un corps (120) avec une section d'encastrement (122) pour au moins un élément capteur (130) du dispositif (110) et avec au moins un canal (126) pour guider un câble électrique (140) entre la section d'encastrement (122) et une surface de liaison (128) du corps (120) détournée de la section d'encastrement (122), le corps (120) étant formé au moyen d'au moins un processus de fabrication additive ou d'un processus de formage à partir d'un matériau céramique ; et
au moins un câble électrique (140) pour contacter l'au moins un élément capteur (130), l'au moins un câble électrique (140) étant produit au moyen d'au moins un processus de fabrication additive à partir d'un matériau électriquement conducteur dans l'au moins un canal (126) entre la section d'encastrement (122) et la surface de liaison (128).

2. Dispositif (110) selon la revendication 1, dans lequel l'au moins un canal (126) présente un profil de section transversale en forme de V, notamment avec un angle d'ouverture compris entre 30 degrés et 150 degrés, ou un profil de section transversale en forme d'arc, notamment avec un rayon géométriquement indéterminé.

3. Dispositif (110) selon l'une quelconque des revendications précédentes, dans lequel la section d'encastrement (122) est formée sous forme plane ou incurvée au moins dans une section partielle, notamment dans lequel un contour de surface de la section d'encastrement (122) est adapté à un contour de surface de l'au moins un composant (102, 106), et/ou dans lequel la section d'encastrement (122) est formée sous la forme d'une rainure qui présente un profil de section transversale en forme de V, notamment avec un angle d'ouverture compris entre 30 degrés et 150 degrés, ou un profil de section transversale en forme d'arc, notamment avec un rayon géométriquement indéterminé.

4. Dispositif (110) selon l'une quelconque des revendications précédentes, dans lequel le corps (120) présente une surface d'enveloppe (225) entre la section d'encastrement (122) et la surface de liaison (128), le corps (120) étant formé entre la section d'encastrement (122) et la surface d'enveloppe (225) et/ou entre la surface de liaison (128) et la surface d'enveloppe (225) avec une section de transition (321) sous la forme d'un chanfrein ou d'un arrondi.

5. Dispositif (110) selon l'une quelconque des revendications précédentes, dans lequel la section d'encastrement (122) est formée avec une rugosité de surface ayant une valeur caractéristique de rugosité prédéfinie ou est usinée à une rugosité de surface ayant une valeur caractéristique de rugosité prédéfinie, notamment dans lequel la rugosité de surface est adaptée à une rugosité de surface de l'au moins un composant (102, 106).

6. Dispositif (110) selon l'une quelconque des revendications précédentes, dans lequel le corps (120) présente, sur des côtés de la surface de liaison (128), une section de liaison (229) pour relier mécaniquement le dispositif (110) à une unité de support et pour positionner axialement le dispositif (110) par rapport à l'unité de support.

7. Dispositif (110) selon l'une quelconque des revendications précédentes, comprenant au moins un élément capteur (130), qui est appliqué dans la section d'encastrement (122) du corps (120) au moyen d'au moins un processus à couche mince.

8. Dispositif (110) selon la revendication 7, comprenant une pluralité d'éléments capteurs (130) et comprenant une pluralité de canaux (126) et de câbles électriques (140), dans lequel un câble de masse électrique (140) est relié électriquement à tous les éléments capteurs (130) dans un canal de masse (126), chacun des éléments capteurs (130) étant en outre relié électriquement à un autre câble électrique propre (140) dans un autre canal propre (126), et/ou dans lequel les autres canaux (126) sont formés avec une distance latérale prédéfinie entre eux.

9. Dispositif (110) selon l'une quelconque des revendications 7 à 8, dans lequel l'au moins un élément capteur (130) est appliqué sous forme de ligne, sous forme droite, sous forme de courbe uniforme, sous forme de courbe non uniforme, sous forme d'arc, sous forme de section d'arc et/ou sous forme de méandre.

10. Dispositif (110) selon l'une quelconque des revendications 7 à 9, dans lequel l'au moins un élément capteur (130) est appliqué avec au moins une dimension constante ou avec au moins une dimension variable avec une allure continue ou discontinue, dans lequel l'au moins une dimension représente une largeur (B_{FA}, B_{FB}, B_{FC}) et/ou une épaisseur de couche de l'au moins un élément capteur (130).

11. Procédé (700) pour la fabrication d'un dispositif (110) pour la détection de la contrainte tribologique d'au moins un composant (102, 106), le procédé (700) comprenant les étapes suivantes :
la formation (710) d'un corps (120) avec une section d'encastrement (122) pour au moins un élément capteur (130) et avec au moins un canal (126) pour le passage d'un câble électrique (140) entre la section d'encastrement (122) et une surface de liaison (128) du corps (120) détournée de la section d'encastrement (122), au moyen d'au moins un processus de fabrication additive ou d'un processus de formage à partir d'un matériau céramique ; et
la production (730) d'au moins un câble électrique (140) pour contacter l'au moins un élément capteur (130) au moyen d'au moins un processus de fabrication additive à partir d'un matériau électriquement conducteur dans l'au moins un canal (126) entre la section d'encastrement (122) et la surface de liaison (128).

12. Procédé (700) selon la revendication 11, comprenant une étape (720) d'application de l'au moins un élément capteur (130) dans la section d'encastrement (122) du corps (120) au moyen d'au moins un processus à couche mince.
